# DEMANDE DE BREVET EUROPEEN

(11) **EP 0 617 371 A1**
(43) Date de publication de la demande: **28.09.1994**
(21) Numéro de dépôt: 94400577.6
(22) Date de dépôt: 16.03.1994
(51) Int. Cl.: G06F 15/28, G07C 15/00

(54) **Terminal de jeux de pari interactif**

(30) Priorité: 22.03.1993 FR 9303270
(71) Demandeur: LA FRANCAISE DES JEUX, F-92523 Neuilly-sur-Seine (FR)
(72) Inventeur: Gatto, Jean-Marie, F-75116 Paris (FR); Bertrand, Dominique, F-75017 Paris (FR)
(74) Mandataire: Obolensky, Michel

(57) **Abrégé**

Terminal de jeux comprenant au moins un moniteur vidéo (35) à écran tactile auquel est associée une mémoire (20) destinée à recevoir au moins des données d'images, et une unité centrale (45) de traitement des applications de jeux pouvant être sélectionnées sur l'écran tactile (12) et des programmes de fonctionnement correspondants, caractérisé en ce que la mémoire (20) est un espace mémoire unique de stockage des données compressées d'images, de programmes, d'applications de jeux et en ce qu'il comporte en outre un contrôleur d'accès (21) destiné à sélectionner les données stockées dans l'espace mémoire et à les aiguiller vers des moyens de traitement des données d'images (31,32), des données de programmes et d'applications (47), associés respectivement au moniteur vidéo (35) et à des moyens (33) de multiplexage des données d'images, des moyens (30) de décompression en temps réel étant interposés entre le contrôleur d'accès (21) et les moyens (31,32) de traitement des données d'images.

## Description

La présente invention concerne les terminaux de jeux tels que les jeux de loterie, de loto, de paris mutuels ou autres, et se rapporte plus particulièrement aux terminaux permettant de jouer de façon instantanée.

Les jeux sont autorisés par l'Etat dans la mesure où il exerce sur eux un contrôle absolu du fait que les enjeux sont centralisés ou centralisables.

A cet effet, les terminaux de jeux font généralement partie d'un système de prise de jeux comportant un réseau de terminaux de jeux placés dans des locaux fréquentés par des joueurs qui déposent dans ces bureaux des bulletins de jeux qu'ils ont remplis, accompagnés de versements de sommes d'argent correspondant aux enjeux qu'ils engagent.

En contrepartie, ils reçoivent un reçu qu'ils conservent jusqu'au tirage.

Les terminaux sont soit reliés par un réseau de communication à un système central de traitement ou centre serveur, soit autonomes.

Jusqu'à présent, le joueur devait attendre un certain temps jusqu'à la date du tirage pour connaître le résultat de son jeu.

Par ailleurs, tout jeu pour lequel le joueur utilisant un terminal de jeux nécessitait jusqu'à présent que le joueur remplisse un bulletin de jeu et reçoive un reçu, ce qui entraînait une importante consommation de papier.

Parmi les terminaux de jeu connus, il existe des dispositifs à moniteur vidéo qui affichent des plans vidéo superposés dont les données correspondantes sont stockées dans différentes zones de mémoire.

Ces divers plans sont par exemple :
- un plan fixe mais à défilement d'une fenêtre déplaçable en X et Y par rapport à ce plan;
- un plan dans lequel évoluent des personnages;
- un plan fixe situé devant les deux plans précédents.

Généralement, ces images ne sont que des images dessinées et animées.

Selon un autre agencement connu, les images vidéo sont stockées dans des zones de mémoire correspondant comme dans le cas précédent à des plans d'affichage différents sur le moniteur et elles sont transmises au dispositif d'affichage par un circuit d'interface approprié.

Dans les moyens de stockage tels qu'un disque, les images sont stockées sous forme compressée ou non.

En vue de leur affichage, les fichiers d'images sont lus dans le disque puis stockés dans une mémoire d'une carte associée à un moniteur vidéo, par l'intermédiaire d'une unité centrale de traitement qui les décompressent lors de la lecture.

Les images décompressées sont ensuite transmises au moniteur d'affichage. Grâce à un circuit approprié.

Un tel agencement permet une bonne définition de l'image mais il implique une grande capacité de mémoire de stockage des images, ce qui le rend coûteux.

Il est par ailleurs connu de commander à partir de plusieurs sources de signaux vidéo l'affichage sur un écran de moniteur d'images par incrustation de ces sources.

Le but de l'invention est de créer un terminal de jeux qui permette aux utilisateurs de jouer de façon instantanée.

Elle a également pour but de créer un terminal de jeux qui permette une réduction considérable de papier utilisé.

Elle a de plus pour but de créer un terminal de jeux interactif qui attire les joueurs en leur permettant de s'amuser en remplissant leurs bulletins de jeux.

Elle a donc pour objet un terminal de prise de jeux comprenant au moins un moniteur vidéo auquel sont associés un émetteur de reçus contre le versement d'une mise et la validation d'un jeu par un joueur sur le moniteur, au moins une mémoire destinée à recevoir au moins des données d'images, au moins une unité centrale de traitement des applications de jeux pouvant être sélectionnées et des programmes de fonctionnement correspondants ainsi que des moyens de sélection d'applications de jeux, caractérisé en ce que la mémoire est un espace mémoire unique de stockage des données compressées d'images, de programmes, d'applications de jeux, et en ce qu'il comporte en outre un contrôleur d'accès ayant une section destinée à sélectionner les données stockées dans l'espace mémoire et à les aiguiller vers des moyens de démultiplexage des données d'images, reliés à leur tour à des moyens de décompression en temps réel des données d'images, connectés à des moyens de traitement des données d'images, des moyens de multiplexage et/ou de mélange étant interposés entre le moniteur vidéo et lesdits moyens de traitement de données d'images, le contrôleur d'accès comprenant en outre une section de commande des moyens de multiplexage.

L'invention sera mieux comprise à l'aide de la description qui va suivre, donnée uniquement à titre d'exemple et faite en se référant aux dessins annexés, sur lesquels :
- la Fig.1 est un schéma synoptique d'un terminal de jeux suivant l'invention;
- la Fig.2 est un schéma synoptique d'une variante du terminal de jeux de la Fig.1;
- la Fig.3 est un schéma synoptique d'une autre variante du terminal de jeux suivant l'invention;
- la Fig.4 est un schéma logique plus détaillé illustrant les différentes fonctions du terminal de jeux suivant l'invention; et
- la Fig.5 est un schéma synoptique correspondant au schéma logique de la Fig.4.

L'invention vise à créer un terminal de jeux comprenant un dispositif d'affichage vidéo commandé par des moyens permettant de réaliser un enchaînement de séquences d'images résultant de prises de vues reconstituant la réalité tout en introduisant dans cet enchaînement des séquences de caractère aléatoire.

La sensation de réalité est obtenue grâce à des sous-ensembles d'images et de sons issus de prises de vues réelles et de sons réels qui s'imbriquent et/ou se succèdent.

La reconstitution et assurée par le fait que les séquences d'images et de sons en s'enchaînant donnent lieu à une seule séquence dont l'aspect donne l'impression de la réalité.

Le caractère aléatoire qui peut d'ailleurs être interactif est obtenu par le fait qu'on peut combiner à l'infini les séquences d'images et de sons donnant lieu à des séquences pseudo-réelles par action sur certains paramètres.

Parmi ces séquences, certaines peuvent être sélectionnés hors de la volonté du joueur, ce qui donne le caractère aléatoire aux séquences d'images et de sons présentées.

Elle vise également à permettre d'obtenir des combinaisons d'images naturelles et d'images de synthèse.

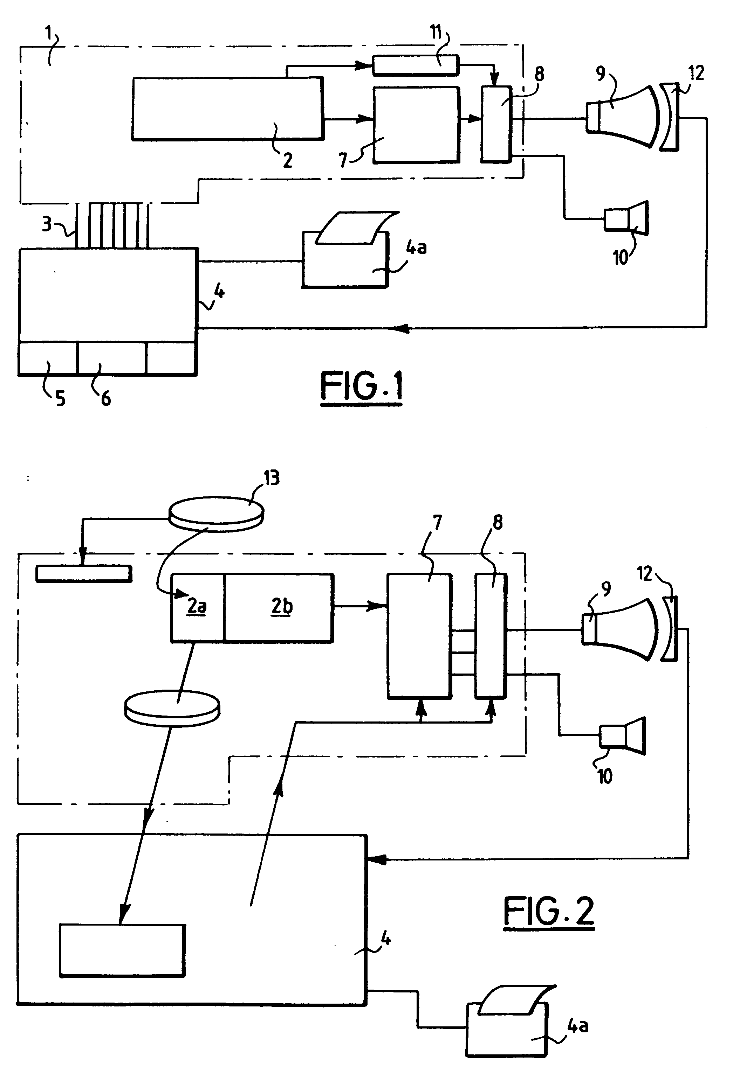

Le terminal de prise de jeux représenté à la Fig.1 comporte principalement une carte de circuit 1 comprenant une mémoire 2 constituée par exemple d'une mémoire Flash, et/ou d'une DRAM de stockage de données d'image compressées et connectées par un bus 3 à une unité centrale de traitement 4 ou CPU qui comporte une zone de mémoire 5 de stockage des applications à exécuter par le terminal et une zone de mémoire 6 de stockage du programme de fonctionnement du terminal. L'unité centrale de traitement 4 est du type système d'exploitation à disques DOS ou OS.

Un émetteur de reçus 4a est associé à l'unité centrale de traitement 4.

La mémoire 2 de la carte 1 est connectée à un ensemble 7 de décompression en temps réel des données d'images et de sons qui à son tour est connecté par sa sortie à un ensemble multiplexeur 8 d'incrustation pour l'image et de mélange pour le son.

Ce dernier comporte une sortie connectée à un moniteur vidéo 9 et une sortie connectée à un dispositif de reproduction sonore 10.

Cette carte est complétée par un circuit 11 connecté entre la mémoire 2 et le circuit multiplexeur 8, pour lui transmettre des données d'images de synthèse à combiner avec des données d'images issues de prises de vues.

A l'écran du moniteur est associé un clavier tactile 12 connecté à l'unité centrale de traitement 4.

On peut également utiliser d'autres moyens de sélection ergonomiques adaptés à ce type d'application.

Le terminal dont le circuit est représenté à la Fig.2 comporte lui aussi une mémoire Flash et DRAM 2 de stockage de données d'images et de sons compressées.

A sa sortie, la mémoire 2 est reliée à un ensemble 7 de décompression de données qui à son tour est connecté à un ensemble multiplexeur 8 de commande d'un moniteur d'affichage 9 et d'un dispositif de reproduction sonore 10.

La mémoire 2 est reliée par un bus à une unité centrale de traitement 4 qui commande également les ensembles 7 et 8 de décompression et multiplexeur et qui traite les instructions provenant de l'écran tactile 12.

Un émetteur de reçus 4a est également associé à l'unité centrale 4.

Ce circuit diffère de celui de la Fig.1 en ce que la mémoire DRAM 2a, de la mémoire 2 est reliée à une mémoire CDROM 13, de stockage des données compressées.

La mémoire 2 de cet agencement est considérée comme un disque virtuel vu par l'unité centrale de traitement 4 et comme faisant donc partie de la mémoire de l'unité centrale, et comme une mémoire vue par l'ensemble de décompression 7.

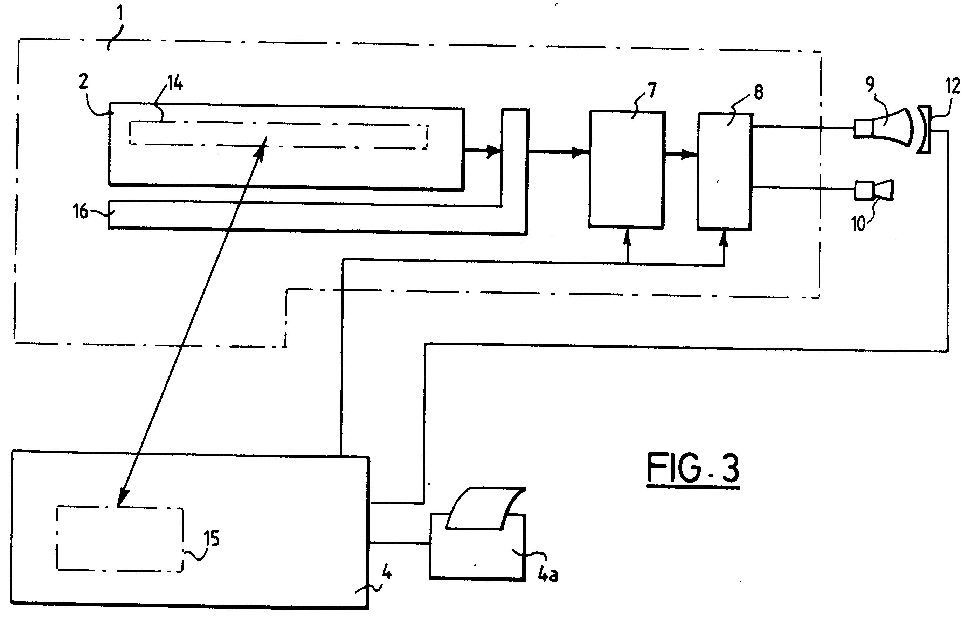

Le circuit du terminal représenté à la Fig.3 diffère essentiellement du circuit de la Fig.1 par le fait que sa mémoire 2 comporte une zone virtuelle 14 de stockage de données d'images et de sons, partagée avec une zone de mémoire 15 de l'unité centrale de traitement 4 et un circuit 16 de gestion à double accès interposé entre le CPU 4 et la mémoire 2 d'une part et entre la mémoire 2 et le circuit de décompression 7 d'autre part.

Cet agencement permet d'assurer un flux rapide de données entre la mémoire vidéo 2 et le multiplexeur 8 représenté en trait gras sur la Fig.3 et un flux contrôlé d'instructions d'une part entre la mémoire 2 et l'unité centrale de traitement 4 et d'autre part entre celle-ci et le circuit de décompression 7 et le multiplexeur 8 représenté en double trait sur la Fig.3.

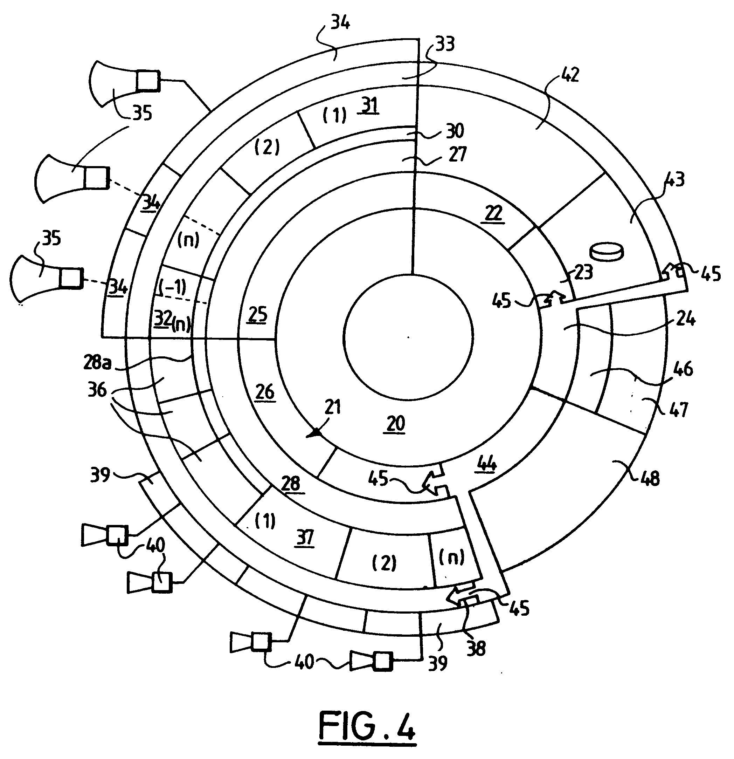

On va maintenant décrire plus en détail le schéma logique du terminal interactif de prise de jeux suivant l'invention représenté à la Fig.4.

Ce schéma synoptique structural doit être lu à partir du centre indiquant la fonction générale du dispositif décrit, vers la périphérie par couches concentriques successives qui donnent des indications de plus en plus détaillées de la structure du dispositif.

Le terminal ainsi représenté comporte un espace mémoire 20 de stockage des données d'images, de sons et d'instructions.

Cet espace mémoire comporte une mémoire Flash et/ou une RAM statique ou dynamique et/ou une ROM et/ou une mémoire à disque.

A cet espace mémoire 20 est associé un contrôleur d'accès 21 qui peut être constitué par un microprocesseur, par une logique câblée ou par une combinaison de tels agencements et qui comporte une section 22 de contrôle d'accès direct à une CDROM, une section 23 de contrôle d'accès à un disque, une section 25 de contrôle d'accès aux moyens de traitement des données d'image et une section 26 de contrôle d'accès aux moyens de traitement de données de son.

Les sections 25 et 26 de contrôle d'accès aux moyens de traitement des données vidéo et de sons du contrôleur d'accès 21 sont reliées respectivement à un démultiplexeur vidéo 27 et à un démultiplexeur de données de son 28.

Le démultiplexeur vidéo 27 est connecté à un ensemble 30 de décompression en temps réel qui est relié à son tour à des circuits 31 de traitement de données vidéo 1 à n issues de prises de vues, en vue de l'affichage de différents plans d'images pour la constitution des scènes à représenter sur des moniteurs et à des circuits 32 de traitement de données vidéo de synthèse 1 à n ou adaptateurs graphiques vidéo afin de les combiner dans des plans images correspondants avec des données vidéo issues de prises de vues réelles. Aux circuits de traitement 31,32 est relié un multiplexeur de signaux vidéo 33 aux sorties duquel sont reliés des convertisseurs numérique-analogiques 34 connectés à autant de moniteurs vidéo 35 que le terminal est destiné à comporter d'écrans.

Le démultiplexeur de signaux sonores 28 est connecté à un ensemble de décompression en temps réel 28a relié à des circuits 36 de traitement des données de sons 1 à n de sources sonores enregistrées correspondantes et des circuits 37 de traitement de données de sons de synthèse de plusieurs sources 1 à n.

Les circuits de traitement 36,37 sont connectés à un multiplexeur 38 de signaux audio qui est à son tour connecté à des convertisseurs numérique-analogiques 39, en nombre égal au nombre de dispositifs 40 de reproduction sonore que comporte le terminal.

La section 22 de contrôle d'accès est reliée à un lecteur de CDROM 42.

La section 23 de contrôle d'accès est connectée à un lecteur de disques 43.

Le contrôleur d'accès 21 comporte en outre une section 44 de contrôle et de démultiplexage des données de programme et applications qui, comme indiqué par la flèche 45 assure le contrôle des autres sections 22,25,26 du contrôleur d'accès 21 ainsi que celui des multiplexeurs 33 et 38 des données d'images et de sons.

A la section 44 de contrôle de données de programmes et d'applications est associé un circuit d'arbitrage de bus 46 relié à une unité centrale de traitement 47.

Selon les besoins de plusieurs unités centrales telles que l'unité 47 peuvent être reliées à l'arbitreur de bus 46.

Enfin, le dispositif de la Fig.4 comporte une zone d'extension 48 destinée à recevoir un dispositif de traitement et de contrôle d'accès supplémentaire.

Les informations destinées à être stockées dans l'espace mémoire 20 sont présentées codées sous la forme d'une chaîne composée de plusieurs champs de données.

Chaque champ correspondant à un type de données est de nature prédéfinissable selon soit un entête, soit un repère associé.

Certains champs sont compressés selon différents procédés qui peuvent être prédictifs, adaptatifs ou non.

Comme indiqué précédemment, des données sont reconnues et triées par le contrôleur d'accès 21 qui peut être un microprocesseur ou bien une logique programmée ou encore un mélange de tels agencements.

Le fonctionnement du terminal interactif multimédia qui vient d'être décrit va maintenant être évoqué dans l'exemple qui va suivre en référence au schéma de la Fig.4.

Lors de la mise en route, il y a initialisation de l'unité centrale de traitement 47.

Le terminal peut immédiatement envoyer des images sur le ou les moniteurs vidéo 35 car les images sont déjà en mémoire dans l'espace mémoire 20.

En effet, grâce à l'invention, les opérations de transfert entre le disque et la mémoire du terminal sont supprimées.

Les images prises dans l'espace mémoire 20 passent simplement par le circuit de décompression en temps réel 30 et sont transmises instantanément aux moniteurs 35.

Pendant que le terminal interactif, envoie les images aux moniteurs, l'unité centrale de traitement 47 peut interroger la mémoire 20 comme un disque virtuel du circuit d'arbitrage de bus 46 et charger les programmes, les données, les images, les sons nécessaires, à l'application sélectionnée par le joueur, dans sa propre mémoire en vue de les traiter et assurer ainsi l'initialisation du terminal en vue de l'exécution de cette application.

L'unité centrale de traitement 47 pilote les circuits de décompression 30 et le multiplexeur 33, 38 d'incrustation pour l'image et de mélange pour le son selon le programme de l'application.

L'écran tactile représenté en 12 sur les Fig.1 à 3 est utilisé pour créer l'interactivité dans chaque application dont les instructions sont contenues dans l'espace mémoire 20.

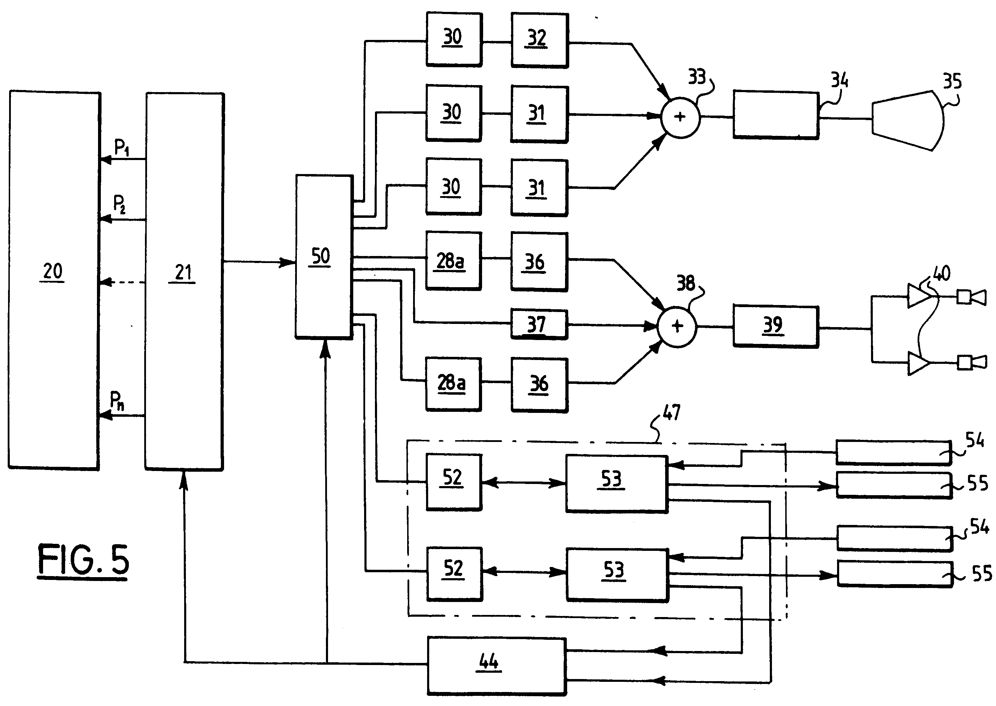

La Fig.5 représente de façon détaillée le schéma synoptique du terminal de prise de jeux suivant l'invention.

Les éléments de ce schéma qui correspondent à ceux du schéma logique de la Fig.4 sont désignés par les mêmes numéros de référence.

L'espace mémoire 20 est connecté à une logique 21 de contrôle d'accès qui correspond au contrôleur d'accès 21 du schéma de la Fig.4 et qui délivre vers l'espace mémoire des pointeurs p1 à pn.

La logique 21 est reliée à sa sortie à un démultiplexeur 50 constitué soit par une logique câblée, soit par un logiciel qui est destiné à sélectionner dans le flux de données qui lui parvient de l'espace mémoire à travers la logique d'adressage qui constitue le contrôleur d'accès 21, les données vidéo, de son, de programmes et d'applications.

Ce démultiplexeur 50 correspond aux démultiplexeurs 27,28 et 45 du schéma de la Fig.4.

Le démultiplexeur 50 comporte des sorties connectées à des circuits 30 de décompression en temps réel des données vidéo qui sont reliés à leur tour à des circuits 31,32 de traitement des données d'images naturelles et d'images synthétiques.

Les sorties de ces circuits de traitement sont connectées à un multiplexeur d'incrustation 33 qui est relié par l'intermédiaire d'un convertisseur analogique 34 à un moniteur 35 qui représente sur la Fig.5 les moniteurs 35 de la Fig.4.

De même, le démultiplexeur 50 comporte des sorties de données de sons reliées à des circuits de décompression en temps réel 28a des données de sons qui a leur tour sont connectés à des circuits 36 de traitement des données de sons naturels.

Le démultiplexeur 50 comporte une sortie de données des sons synthétiques connectée directement à un circuit de traitement 37 sans passer par un circuit de décompression.

Les sorties des circuits de traitement 36,37 sont reliées à un multiplexeur 38 dont la sortie est connectée par l'intermédiaire d'un convertisseur analogique 39 à des dispositifs 40 de reproduction sonore.

Le démultiplexeur 50 comporte de plus des sorties de programmes et d'applications qui sont connectées à des unités centrales de traitement 52 reliées à leur tour par des logiques d'entrée/sortie 53 d'une part à des moyens 54 de sélection qui peuvent être par exemple l'écran tactile 12 des modes de réalisation des Fig.1 à 3, un clavier, un palonnier de jeu, un capteur constitué par exemple par un ballon qui doit être frappé par le joueur, un clavier ou autre, d'autre part à des moyens d'émission de résultats qui peuvent par exemple commander l'imprimante 4a des modes de réalisation des Fig.1 à 3 et enfin à la section 44 de contrôle d'accès des données de programmes et d'application qui à sa sortie commande les pointeurs d'adresses p1 à pn transmis à l'espace mémoire 20 et également le démultiplexeur 50.

Les unités centrales de traitement 52 et leurs logiques d'entrée/sortie associées 53 constituant en fait l'unité centrale de traitement 47 du schéma de la Fig.4.

L'agencement qui vient d'être décrit permet donc de disposer d'un terminal interactif multimédia qui permet de représenter sur un ou plusieurs écrans de moniteurs vidéo, dans plusieurs plans, des images provenant de prises de vue réelles et/ou des images synthétiques et de reproduire sur un ou plusieurs dispositifs de reproduction sonore des sons d'enregistrement naturels et/ou des sons synthétiques.

Les applications stockées dans l'espace mémoire 20 sont par exemple les règles de plusieurs jeux dont la sélection par le joueur sur l'écran tactile du moniteur vidéo dont il dispose fait apparaître sur l'écran du moniteur soit une grille de jeu telle qu'une grille de loto que le joueur n'a qu'à remplir en appuyant sur les cases de la grille, soit une scène représentant une situation de jeu à laquelle le joueur doit participer, par exemple les buts d'un terrain de football, avec au fond une foule de spectateurs, devant les buts un gardien prêt à arrêter un tir, et au point de penalty un ballon destiné à être tiré par un autre joueur, ces diverses images étant des images réelles tirées de prises de vue et au bas de l'écran des images synthétiques montrant des possibilités pour le joueur de choisir diverses trajectoires pour le ballon afin d'essayer de "tromper" le gardien.

Une fois que le joueur a choisi la manière de tirer le ballon, le terminal à l'aide des moyens décrits ci-dessus déclenche une séquence de tir au but avec mouvement du gardien selon une trajectoire préréglée ou déterminée de façon aléatoire, une trajectoire du ballon correspondant au choix de l'utilisateur du terminal et des sons reproduisent l'impact du pied du tireur sur le ballon l'arrêt éventuel du ballon par le gardien, le bruit de la foule des spectateurs ou autre.

Par conséquent, le terminal de jeux suivant l'invention est bien un terminal interactif multimédia.

En outre, en fournissant en quelque sorte un bulletin de jeu au joueur par simple affichage, le terminal suivant l'invention permet une économie de papier non négligeable dans la mesure où il évite d'imprimer des bulletins.

Lorsque le joueur a fait son jeu et payé sa mise, il suffit alors de lui délivrer un reçu correspondant à son pari et à l'enjeu versé.

Dans le cas de jeux interactifs immédiats, le joueur peut éventuellement recevoir immédiatement un reçu et sur ce reçu le montant de son gain.

Le terminal suivant l'invention peut soit être mis en réseau avec des terminaux semblables, soit associé à des terminaux de jeux existants.

## Revendications

1. Terminal de prise de jeux comprenant au moins un moniteur vidéo (9;35) auquel sont associés un émetteur de reçus contre le versement d'une mise et la validation d'un jeu par un joueur sur le moniteur, au moins une mémoire (2;20) destinée à recevoir au moins des données d'images, au moins une unité centrale (4;47) de traitement des applications de jeux pouvant être sélectionnées et des programmes de fonctionnement correspondants ainsi que des moyens (12) de sélection d'applications de jeux, caractérisé en ce que la mémoire (2;20) est un espace mémoire unique de stockage des données compressées d'images, de programmes, d'applications de jeux, et en ce qu'il comporte en outre un contrôleur d'accès (21) ayant une section (25) destinée à sélectionner les données stockées dans l'espace mémoire (2;20) et à les aiguiller vers des moyens (27;50) de démultiplexage des données d'images, reliés à leur tour à des moyens (7;30) de décompression en temps réel des données d'images, connectés à des moyens (31,32) de traitement des données d'images, des moyens de multiplexage et/ou de mélange (33) étant interposés entre le moniteur vidéo et lesdits moyens de traitement de données d'images, le contrôleur d'accès comprenant en outre une section (46) de commande des moyens de multiplexage (33).

2. Terminal de jeux suivant la revendication 1, caractérisé en ce que la mémoire (2;20) comporte au moins une mémoire Flash et/ou une mémoire RAM statique ou dynamique et/ou une mémoire ROM et/ou une mémoire à disque.

3. Terminal suivant l'une des revendications 1 et 2, caractérisé en ce que les données destinées à être stockées dans l'espace mémoire (2;20) sont présentées codées sous la forme d'une chaîne unique composée de plusieurs champs de données dont certains sont compressés selon différents procédés, chaque champ de données d'un type étant prédéfinissable par un entête ou un repère associé.

4. Terminal de jeux suivant l'une des revendications 1 à 3, caractérisé en ce que le contrôleur d'accès (21) est un microprocesseur, un circuit logique programmé ou une combinaison de tels agencements.

5. Terminal de jeux suivant l'une quelconque des revendications précédentes, caractérisé en ce que les moyens (31,32) de traitement de données d'images comportent des circuits (31) de traitement de données vidéo 1 à vidéo n issues de prises de vues, en vue de l'affichage de différents plans d'images pour la constitution de scènes à représenter sur le moniteur et des circuits (32) de traitement de données vidéo de synthèse graphique 1 à n afin de les combiner dans des plans images correspondants avec des données vidéo issues de prises de vues réelles.

6. Terminal de jeux suivant l'une des revendications 1 à 5, comprenant en outre au moins un dispositif de reproduction sonore (10;40), caractérisé en ce que la mémoire (2;20) assure également le stockage des données de sons comprimées ou non et en ce que le contrôleur d'accès (21) comporte une section (26) de contrôle d'accès de données de sons stockées dans la mémoire, à des moyens de démultiplexage (28;50) de données de sons, connectés à des moyens (28a) de décompression en temps réel des données de sons, reliés à leur tour à des moyens (36,37) de traitement des données de sons, des moyens de multiplexage (38) étant interposés entre le dispositif de reproduction sonore (40) et lesdits moyens de traitement de données de sons (36,37), la section (44) du contrôleur d'accès (21) assurant également la commande des moyens (38) de multiplexage des données de sons.

7. Terminal de jeux suivant la revendication 6, caractérisé en ce que les circuits (36,37) de traitement des données de sons comportent des circuits (36) de traitement de données de sons naturels enregistrés et des circuits (37) de traitement de sons synthétiques stockés dans la mémoire (2;20).

8. Terminal suivant l'une quelconque des revendications 1 à 7, caractérisé en ce que la mémoire (2) est considérée comme un disque virtuel vu par l'unité de traitement (4) et comme faisant donc partie de la mémoire de l'unité centrale de traitement et comme une mémoire vue par le circuit de décompression (7).

9. Terminal suivant l'une des revendications 1 à 7, caractérisé en ce que la mémoire (2) comporte une zone virtuelle (14) de stockage de données d'images et de sons partagée avec une zone de mémoire (15) de l'unité centrale de traitement (4) et un circuit (16) de gestion à double accès interposé entre l'unité de traitement (4) et la mémoire (2) d'une part et entre la mémoire (2) et le circuit de décompression (7) d'autre part.

10. Terminal suivant l'une quelconque des revendications 1 à 7, caractérisé en ce qu'il comporte des moyens convertisseurs numérique-analogiques (34;39) connectés entre les moyens de multiplexage (33;38) et le ou lesdits moniteurs vidéo (35) d'une part, et le ou lesdits dispositifs de reproduction sonore (40) d'autre part.
